(19) Europäisches Patentamt
European Patent Office
Office européen des brevets

(11) **EP 1 176 005 B1**

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(51) Int Cl.⁷: **B32B 27/36**, C08J 5/18
// C08L67:02

(21) Anmeldenummer: **01116685.7**

(22) Anmeldetag: **17.07.2001**

(54) **Mehrschichtige, transparente, biaxial orientierte Polyesterfolie**

Multilayered, transparent, biaxially oriented polyester film

Film composite multicouches de polyester transparent et orienté biaxialement

(84) Benannte Vertragsstaaten:
**DE FR GB IT LU NL**

(30) Priorität: **26.07.2000 DE 10036407**

(43) Veröffentlichungstag der Anmeldung:
**30.01.2002 Patentblatt 2002/05**

(73) Patentinhaber: **Mitsubishi Polyester Film GmbH**
**65203 Wiesbaden (DE)**

(72) Erfinder:
• **Pfeiffer, Herbert, Dr.**
**55126 Mainz (DE)**
• **Hilkert, Gottfried, Dr.**
**55291 Saulheim (DE)**

(74) Vertreter: **Schweitzer, Klaus et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
EP-A- 0 503 443          EP-A- 0 504 651
EP-A- 0 685 509          EP-A- 0 707 979
EP-A- 0 952 176          WO-A- 01/60608
DE-A- 19 500 377

• DATABASE WPI Section Ch, Week 199615 Derwent Publications Ltd., London, GB; Class A23, AN 1996-148338 XP002114377 & JP 08 036739 A (TORAY IND INC), 6. Februar 1996 (1996-02-06)

**Beschreibung**

Die Erfindung betrifft eine transparente, zumindest dreischichtige, biaxial orientierte Polyesterfolie mit mindestens einer Basisschicht B und mindestens zwei Deckschichten A und C , die sich auf Grund ihrer niedrigen planaren Orientierung $\Delta p$ sehr gut für die Anwendung als Deckelfolie, insbesondere als Deckelfolie für Jogurtbecher nach dem Mixpapsystem, eignet. Die Erfindung beinhaltet weiterhin ein Verfahren für die Herstellung der Folie und ihre Verwendung.

Eine bekannte Anwendung von biaxial orientierten Polyesterfolien sind Deckel, z.B. Deckel für Jogurtbecher. Sie werden dort alternativ zu Aluminiumfolien eingesetzt. Bei Deckeln aus Polyesterfolie wird derzeit im Wesentlichen zwischen den zwei im Folgenden näher beschriebenen Ausführungsformen unterschieden:

Zum einen Deckel, die nur aus Polyesterfolie bestehen.

Derartige Deckel werden auf der Oberseite der Folie (=des Deckels) bedruckt und auf der Unterseite der Folie (= Innenseite des Deckels) mit einem Lack versehen, mit dem die Deckel auf den Becher geklebt werden. Zur Verbesserung der Haltbarkeit des Yogurts müssen sowohl der Becher als auch der Deckel genügend Lichtschutz aufweisen. Dies geschieht in der Regel durch Einfärben der Materialien für den Deckel und für den Becher mit Titandioxid oder mit anderen geeigneten Pigmenten oder Farbstoffen. Eine weitere, wichtige Forderung an die Deckelfolie ist, dass sie auf Grund ihrer ausgewählten mechanischen Eigenschaften beim Abziehen vom Becher nicht ein- und weiterreist. Außerdem darf die Folie beim Abziehen vom Becher nicht delaminieren. Die erforderlichen mechanischen Eigenschaften erhält die Folie durch die biaxiale Streckung und durch eine entsprechend hohe Dicke. Die mechanischen Eigenschaften des Deckels (Steifigkeit, Durchstoßfestigkeit, Weiterreißfestigkeit, etc.) verbessern sich mehr als proportional mit der Dicke der Folie. Für die Deckelanwendung bei Jogurt haben sich Polyesterfolien mit einer Dicke von 30 bis 100 μm bewährt. Andererseits kann die Dicke der Folie nicht beliebig gesteigert werden, da mit der Dicke die Materialkosten anwachsen sowie die Siegeltackzeiten zurückgehen, was aus wirtschaftlicher Sicht unerwünscht ist. Die Vorteile von diesen Deckeln liegen auf der Hand:

-   Der Deckel aus Polyesterfolie hat eine glatte, hoch glänzende Oberfläche, die eine exzellente Farbwiedergabe garantiert und dadurch optisch sehr ansprechend wirkt.
-   Die Folie hat im Vergleich zu konventionellem Material eine bis 700 % höhere Durchstoßfestigkeit, was einen wesentlich höheren Produktschutz zur Folge hat.
-   Der Deckel ist leicht zu öffnen, ohne dass Fragmente des Deckels am Becher hängen bleiben, wie es bei konventionellen Materialien beobachtet wird. Diese Eigenschaft wird insbesondere vom Verbraucher geschätzt.
-   Die vollständige Trennung von Becher und Deckel ist von großem Vorteil für die Rezyklierbarkeit der beiden Materialien. Die Deckelfolie besteht aus thermoplastischem Polyester, der exzellent rezyklierbar ist. Das Produkt ist damit zugleich umweltsicher und umweltfreundlich.
-   Außerdem ist der Deckel absolut metallfrei. Dies garantiert ein sehr hohe Sicherheit bei der Metalldedektierung, die bei der Herstellung von Lebensmitteln immer häufiger angewendet wird. Mit der Methode kann damit der Anteil an dem im Füllgut enthaltenen metallischen Bestandteilen mit hoher Genauigkeit bestimmt werden.

Neben o.g. Deckeln, die nur aus Polyester bestehen sind auch Deckel, die aus einem Verbund aus transparenter, biaxial orientierter Polyesterfolie und Papier bestehen, bekannt. Bei der Polyesterfolie handelt es sich dabei - anders als bei der erstgenannten Variante - um vergleichsweise dünne in der Regel ca. 12 μm dicke biaxial orientierte Folien. Beide Materialien (Papier und Polyesterfolie) werden mittels geeignetem Kleber kaschiert und zu Deckeln verarbeitet. Die erforderliche Steifigkeit des Deckels ergibt sich aus der Kaschierung von Polyesterfolie und Papier zu einem dicken Laminat. Bei dieser Variante wird in der Regel die Seite der Polyesterfolie, die zum Papier hin zu liegen kommt, mit Aluminium metallisiert. Hierdurch bleibt der metallene Charakter des Deckels - wie er durch einen Deckel aus reiner Aluminiumfolie erweckt wird - erhalten. Die andere Seite der Polyesterfolie (Außenseite der Folie, zeigt vom Verbund weg) wird mit einem geeigneten Kleber beschichtet und dann auf den Becher aus PP oder PS geklebt. Das so beschriebene Laminat ist im Verpackungsmarkt als ‚Mixpapsystem' bekannt geworden.

Die zuletzt genannte Variante weist prinzipiell die gleichen guten Eigenschaften auf wie die zuerst genannte Variante. Im Vergleich zu dieser ist sie jedoch wesentlich wirtschaftlicher herstellbar. Berücksichtigt werden muss aber, dass sie-bedingt durch die Verwendung von dünner Folie - mechanisch wesentlich anfälliger ist als die erstgenannte Variante. Das Laminat kann nicht die guten mechanischen Eigenschaften aufweisen wie die ca. 60 μm dicke Polyesterfolie. Insbesondere beim Aufziehen des Deckels vom Becher kann es zu einer Delaminierung oder zum Ein- und Weiterreißen der Polyesterfolie kommen. Hierdurch wird der Abziehvorgang des Deckels unkalkulierbar. Insbesondere hinsichtlich eines einwandfreien Abziehverhaltens sollte die Polyesterfolie optimierte mechanische Eigenschaften aufweisen, ohne jedoch dadurch in der Herstellung teurer zu werden.

Weiterhin sollte die bei der vorliegenden Anwendung eingesetzte Polyesterfolie hochtransparent und hochglänzend sein, damit insbesondere der metallische Charakter des metallisierten Deckels optimal werbewirksam genutzt werden kann. Diese Anforderung wird durch im Markt bekannte Folien nur bedingt erfüllt.

So beschreibt z.B. das Produktdatenblatt TERPHANE® 10.62 der Fa. Toray Plastic Europe eine Polyesterfolie, die für diese Anwendung verwendet wird. Die für die Anwendung speziell erforderlichen mechanischen Eigenschaften werden durch die sogenannten ISOTROPIE-Werte charakterisiert. Als optische Eigenschaften wird lediglich die Trübung aufgeführt, die laut Datenblatt einen Wert von ca. 3.5 % hat. Über den Glanz der Folie wird keine Aussage getroffen. Gerade dies beiden Eigenschaften charakterisieren aber das optische Erscheinungsbild wesentlich.

Die EP-A 0 952 176 offenbart eine zumindestens zweischichtige, biaxial orientierte Polyesterfolie, die gutes Verarbeitungsverhalten nach ihrer Metallisierung oder nach ihrer Beschichtung mit oxydischen Materialen zeigt und sehr gute Gas- bzw. Sauerstoffbarriereeigenschaften besitzt. Die Folie besteht aus mindestens einer Basisschicht und mindestens einer auf dieser Basisschicht aufgebrachten Deckschicht, wobei die planare Orientierung $\Delta$p größer als 0,164 ist. Ein Vergleichsbeispiel in diesem Dokument hat eine planare Orientierung von 0,162. Ist die planare Orientierung $\Delta$p der Folie kleiner als 0,164, so ist die Barriere schlechter. Ist andererseits die planare Orientierung $\Delta$p der Folie größer als 0,164, so sind die Barriereeigenschaften gut.

EP-A 0 504 651 betrifft eine koextrudierte, biaxial orientierte Polyesterfolie aus einer Basisschicht und zwei Deckschichten. Die planare Orientierung $\Delta$p ist kleiner/gleich 0,100. Die Folie wird als Trägerfolie für ein Magnetband verwendet. Daher sind Glanz und Trübung der Folie für diesen Einsatz unbeachtliche Eigenschaften und werden in der Beschreibung auch nicht erwähnt.

Weiterhin beschreibt das Produktdatenblatt Nu Roll® 12 PXO der Fa. Nu Roll eine Polyesterfolie, die für diese Anwendung verwendet wird. Die für die Anwendung speziell erforderlichen mechanischen Eigenschaften werden durch die sogenannten ISOTROPIE-Werte charakterisiert. Als optische Eigenschaften wird lediglich die Trübung aufgeführt, die laut Datenblatt einen Wert von ca. 2.3 % hat. Über den Glanz der Folie wird keine Aussage getroffen. Gerade dies beiden Eigenschaften charakterisieren aber das optische Erscheinungsbild wesentlich.

In der EP-A 0 685 509 wird eine transparente, biaxial orientierte Polyesterfolie für die Kaschierung von Blechdosen beschrieben, die sich aus einer Mischung von 70 bis 40 Gew.-% Polyethylenterephthalat und 30 bis 60 Gew.-% Polybutylenterephthalat zusammensetzt, wobei die Folie durch folgende Parameter gekennzeichnet ist

- die Kristallisationstemperatur liegt im Bereich von 65 bis 120°C
- die zweite Übergangstemperatur ist höher als 40°C
- die planare Orientierung $\Delta$p liegt im Bereich von 0.12 bis 0.19
- es treten in der Folie keine weißen Flecken auf, nachdem die Folie mit der Blechdose kaschiert ist.

Die Folie eignet sich aufgrund ihrer Zusammensetzung und den daraus abgeleiteten mechanischen und optischen Eigenschaften nicht für die Mixpap-Anwendung.

In der EP-A 0 707 979 wird eine transparente, biaxial orientierte Polyesterfolie für die Thermo-Transfer-Anwendung beschrieben, die eine spezielle Beschichtung aus wasserlöslichen Substanzen auf Basis von Urethan, Polyester und Acrylaten aufweist. Die Folie ist durch eine planare Orientierung $\Delta$p gekennzeichnet, die im Bereich von 0.145 und 0.169 liegt. Aufgrund der verwendeten Beschichtung und des verwendeten Pigmentsystem ist die Folie nicht für die Mixpap-Anwendung geeignet. Die Folie ist zu teuer (Kosten für die Beschichtung sind zu hoch, da sich die Folie nicht regenieren läßt) und hat eine zu hohe Trübung und einen zu geringen Glanz.

In der EP-A 0 612 790 wird eine transparente, biaxial orientierte Polyesterfolie für die Magnetband-Anwendung beschrieben, die ein Partikelsystem aus vernetzten Polymeren enthält. Die Folie soll durch eine planare Orientierung $\Delta$p gekennzeichnet sein, die größer ist als 0.14. Alle in den Beispielen aufgeführten Folien haben eine planare Orientierung $\Delta$p von 0.17. Aufgrund der in den Beispielen angegeben planaren Orientierung $\Delta$p von 0.17 und des verwendeten Pigmentsystem ist die Folie nicht für die Mixpap-Anwendung geeignet. Die Folie ist zu teuer (Kosten für die Pigmente sind zu hoch, außerdem neigen die verwendeten Pigmente zurAgglomeration, was unerwünscht ist) und hat eine zu hohe Trübung und einen zu geringen Glanz.

Es war daher Aufgabe der Erfindung, eine mehrschichtige, biaxial orientierte Polyesterfolie für die Mixpap-Anwendung bereitzustellen, die sich gegenüber Folien gemäß Stand der Technik durch verbesserte Eigenschaften auszeichnet. Insbesondere soll die neue Polyesterfolie durch die folgende Eigenschaftskombination gekennzeichnet sein

- hoher Glanz, d.h. (> 170)
- niedrige Trübung (d.h. < 2.4 %)
- gute Verarbeitbarkeit (d.h. kein Verblocken, COF < 0.6, gute Wickelbarkeit)
- gute mechanische Eigenschaften, infolge derer die Tendenz zum Delaminieren der Folie beim Abziehen des Folienverbundes vom Becher gering ist (d.h. $\Delta$p < 0.162)
- und wirtschaftliche Herstellbarkeit (d.h. keine Abrisse, Regenerat ist wiederverwendbar).

Die Folie sollte in den mechanischen Eigenschaften so beschaffen sein, dass insbesondere beim Abziehen des Deckels von dem Becher die Folie nicht delaminiert und/oder nicht ein- und weiterreißt. Außerdem sollte die Folie wirtschaftlich herstellbar sein. Bei der Herstellung der Folie muss insbesondere Gewähr geleistet werden, dass das Regenerat in einer Konzentration von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Gelöst wird die Aufgabe durch eine koextrudierte, zumindest dreischichtige transparente, biaxial orientierte Polyesterfolie mit mindestens einer Basisschicht B, die zu mindestens 80 Gew.-% aus einem thermoplastischem Polyester besteht, und wobei auf jede Oberfläche dieser Basisschicht eine Deckschicht aufgebracht ist, wobei mindestens eine dieser Deckschichten Partikel enthält und wobei

- der Glanz beider Folienoberflächen größer als 170
- die Trübung der Folie kleiner als 2.4 %
- COF kleiner als 0.6 und
- die planare Orientierung Δp der Folie kleiner als 0.162

ist.

Erfindungsgemäß ist die Folie durch einen sehr hohen Glanz gekennzeichnet. Der Glanz beider Oberflächen ist erfindungsgemäß größer als 170, insbesondere größer als 175 und besonders bevorzugt größer als 180. Der metallische Charakter des metallisierten Deckels kommt hierdurch besonders werbewirksam zum Vorschein.

Die Trübung der Folie ist gering. Die Trübung der erfindungsgemäßen Folie ist kleiner als 2.4 %, bevorzugt kleiner als 2.2 % und besonders bevorzugt kleiner als 2.0 %. Hierdurch ist gewährleistet, dass die Gesamtstruktur des Deckels ein besonders brillantes Aussehen erhält.

Der Reibungskoeffizient COF sollte kleiner 0.6 sein. In der bevorzugten Ausführungsform beträgt der COF weniger als 0.55 und in der besonders bevorzugten Ausführungsform weniger als 0.5. Das Verarbeitungsverhalten der Folie ist bei der bevorzugten Ausführungsform besonders gut.

Die planare Orientierung Δp der erfindungsgemäßen Folie ist kleiner als 0.162, bevorzugt kleiner als 0.160 und besonders bevorzugt kleiner als 0.158. Durch die vergleichsweise geringe planare Orientierung Δp der Folie werden überraschender weise die Delaminierungseigenschaften verbessert, d.h. die Tendenz zur Delaminierung verringert sich.

Erfindungsgemäß ist die Folie zumindest dreischichtig aufgebaut und weist auf der einen Seite der Schicht B (=Basisschicht) die Deckschicht A und auf der anderen Seite der Basisschicht B eine weitere Deckschicht C aus Polyethylenterephthalat auf. Beide Deckschichten enthalten die für die Herstellung und Verarbeitung der Folie förderlichen Partikel.

Für die Materialien der verschiedenen Schichten können prinzipiell verschiedene Rohstoffe verwendet werden. Es ist jedoch bevorzugt, die einzelnen Schichten auf Basis von Polyesterrohstoffen herzustellen.

Die Basisschicht B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, und besonders bevorzugt mindestens 97 Mol-% aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren

besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Deckschichten und eventuell vorhandene Zwischenschichten können prinzipiell die gleichen Polymere verwendet werden, wie für die Basisschicht. Daneben können in den Deckschichten auch andere Materialien enthalten sein, wobei dann die Deckschichten bevorzugt aus einem Gemisch von Polymeren, einem Copolymeren oder einem Homopolymeren bestehen, welche Ethylen-2,6-naphthalat-Einheiten und Ethylenterephthalat-Einheiten enthalten. Bis zu 10 Mol-% der Polymere können aus weitere Comonomeren (s.o.) bestehen.

Für die Verarbeitung der Polymere hat es sich als günstig erwiesen, die Polymere für die Basisschicht und die anderen Schichten so zu wählen, dass sich die Viskositäten der jeweiligen Polymerschmelzen nicht zu sehr unterscheiden. Im anderen Fall ist mit zusätzlichen Erhebungen/Vorsprüngen, mit Fließstörungen oder mit Streifenbildung auf der fertigen Folie zu rechnen. Für die Beschreibung der Viskositätsbereiche der beiden Schmelzen wird eine modifizierte Lösungsmittelviskosität (SV-Wert oder "standard viscosity") verwendet. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie im Sinne der vorliegenden Erfindung zu gewährleisten, sollte der SV-Wert der Polymeren für die Schichten A oder C im Bereich von 500 bis 1200, bevorzugt im Bereich von 550 bis 1150, insbesondere bevorzugt im Bereich von 600 bis 1000 liegen. Falls erwünscht, kann an den jeweiligen Granulaten eine Festphasenkondensation durchgeführt werden, um die benötigten SV-Werte der Materialien einzustellen. Es gilt, dass sich die SV-Werte der Polymerschmelzen für Basis- und die anderen Schichten um nicht mehr als 200, vorzugsweise nicht mehr als 150, insbesondere aber nicht mehr als 100 Einheiten unterscheiden sollten.

Die Basisschicht B und die eventuell vorhandene andere Schichten können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der bei der Polyesterherstellung eingesetzten Dicarbonsäuren, Ruß, Titandioxid, Kaolin oder Polymerpartikel, wie vernetzte Polystyrol- oder Acrylat-Partikel.

Als Antiblockmittel können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden. Eine detaillierte Beschreibung der Antiblockmittel findet sich beispielsweise in der EP-A-0 602 964.

Die Konzentration der inerten Partikel in den Deckschichten A und C liegt zwischen 0.01 und 0.4 Gew.-%, bevorzugt zwischen 0.02 und 0.35 Gew.-%, insbesondere bevorzugt zwischen 0.025 und 0.30 Gew.-% und ganz insbesondere bevorzugt zwischen 0.030 und 0.25 Gew.-% und richtet sich im wesentlichen nach der Größe der eingesetzten Partikel.

Als zweckmäßig hat es sich für die Lösung der Aufgabe erwiesen, die Konzentration der Partikel innerhalb der Folie so zu wählen, dass der Aschegehalt der Folie kleiner als 0.20 %, bevorzugt kleiner als 0.18 % und besonders bevorzugt kleiner als 0.16 % ist.

Weiterhin hat es sich für die Lösung der Aufgabe als zweckmäßig erwiesen, die Art der Partikel, die Konzentration der Partikel und den Partikeldurchmesser innerhalb der Folie so zu wählen, dass die mittlere Rauigkeit ($R_a$) beider Folienoberflächen in einem Bereich von 40 bis 120 nm, bevorzugt in einem Bereich von 45 bis 110 nm und besonders bevorzugt in einem Bereich von 50 bis 100 nm; und der Reibungskoeffizient beider Folienoberflächen kleiner als 0.6 ist, bevorzugt kleiner als 0.55 und besonders bevorzugt kleiner als 0.5. Das Verarbeitungsverhalten der Folie ist dann besonders gut.

Bevorzugte Partikel sind $SiO_2$ in kolloidaler und in kettenartiger Form. Diese Partikel werden sehr gut in die Polymermatrix eingebunden und erzeugen nur geringfügig Vakuolen. Vakuolen verursachen im allgemeinen eine Trübung und sind daher zweckmäßiger Weise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm und besonders bevorzugt kleiner als 50 nm und/oder Teilchen mit einem mittleren Primärpartikeldurchmesser von größer als 1 μm, bevorzugt größer als 1.5 μm und besonders bevorzugt größer als 2 μm zu verwenden. Der mittlere Durchmesser der Teilchen sollte andererseits nicht größer als 5 μm sein.

Die Pigmentierung der einzelnen, die Deckschichten nicht betreffende Schichten, kann danach sehr verschieden sein und richtet sich im wesentlichen nach dem Folienaufbau (Schichtaufbau) und den Anforderungen der Folie hinsichtlich Erzielung der weiteren optischen Eigenschaften (z.B. Trübung) und dem Herstellungs- und Verarbeitungsverhalten.

Handelt es sich um die erfindungsgemäße dreischichtige Folie mit der Basisschicht B und den beiden Deckschichten A und C, so ist in der Basisschicht B die Partikelkonzentration vorzugsweise niedriger als in den Deckschichten. Bei der dreischichtigen Folie vom genannten Typ wird in der Basisschicht B die Partikelkonzentration zwischen 0 und 0.06 Gew.-%, bevorzugt zwischen 0 und 0.04 Gew.-%, besonders bevorzugt zwischen 0 und 0.03 Gew.-% und ganz besonders bevorzugt zwischen 0 und 0.02 Gew.-% liegen. Der Partikeldurchmesser der eingesetzten Teilchen ist prinzipiell nicht eingeschränkt, jedoch sind Teilchen mit einem mittleren Durchmesser von größer 1 μm bevorzugt; Teilchen mit einem mittleren Durchmesser von größer 1.5 μm sind besonders bevorzugt.

Die erfindungsgemäße Polyesterfolie ist dreischichtig aufgebaut und umfaßt die beiden Deckschichten A und C. Dicke und Zusammensetzung der zweiten Deckschicht C können unabhängig von der Deckschicht A gewählt werden, wobei die zweite Deckschicht ebenfalls die bereits genannten Polymere oder Polymermischungen enthalten kann, welche aber nicht mit der der ersten Deckschicht identisch sein müssen. Die zweite Deckschicht kann auch andere gängige Deckschichtpolymere enthalten.

Zwischen der Basisschicht und den Deckschichten kann sich gegebenenfalls noch eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0.3 μm und liegt bevorzugt im Bereich von 0.5 bis 15 μm, besonders bevorzugt im Bereich von 1.0 bis 10 μm und ganz besonders bevorzugt im Bereich von 1.0 bis 5 μm.

Bei der besonders vorteilhaften dreischichtigen Ausführungsform der erfindungsgemäßen Folie sind die Dikken der Deckschichten A und C im allgemeinen größer als 0.1 μm und liegen im Bereich von 0.2 bis 2.5 μm, bevorzugt im Bereich von 0.2 bis 2.2 μm, besonders bevorzugt im Bereich von 0.3 bis 2.0 μm und ganz besonders bevorzugt im Bereich von 0.3 bis 1.8 μm, wobei die Deckschichten A und C gleich oder verschieden dick sein können.

Die Gesamtdicke der erfindungsgemäßen Polyesterfolie kann innerhalb bestimmter Grenzen variieren und richtet sich nach dem beabsichtigten Verwendungszweck. Sie beträgt 6 bis 30 μm, insbesondere 7 bis 25 μm, vorzugsweise 8 bis 20 μm, wobei die Schicht B einen Anteil von vorzugsweise etwa 50 bis 95 % an der Gesamtdicke hat.

Zur Herstellung der Schichten A und C (Deckschicht/en A und C) werden zweckmäßig Granulate aus dem entsprechenden Polymer einem bzw. zwei Extrudern zugeführt. Die Materialien werden bei etwa 300 °C aufgeschmolzen und extrudiert.

Die Polymere für die Basisschicht B werden zweckmäßiger Weise über einen weiteren Extruderzugeführt. Etwa vorhandene Fremdkörper oder Verunreinigungen lassen sich aus der Polymerschmelze vor der Extrusion abfiltrieren. Bei der erfindungsgemäßen mehrschichtigen Folie werden die Schmelzen in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die Erfindung betrifft weiterhin ein Verfahren zur Herstellung der erfindungsgemäßen Polyesterfolie nach dem an sich bekannten Koextrusionsverfahren.

Im Rahmen dieses Verfahrens wird so vorgegangen, dass die der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im Allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist.

Zunächst wird wie beim Koextrusionsverfahren üblich, das Polymere bzw. die Polymermischung der einzelnen Schichten in dem jeweiligen Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Folie wird auf einer oder mehreren Abzugswalzen abgezogen, wobei sie abkühlt und sich verfestigt.

Die biaxiale Verstreckung wird im Allgemeinen sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variiieren

und richtet sich nach den gewünschten Eigenschaften der Folie. Im Allgemeinen wird die Längsstreckung bei 80 bis 140 C und die Querstreckung bei 90 bis 150 °C durchgeführt. Das Längsstreckverhältnis liegt allgemein im Bereich von 2.0:1 bis 6:1, bevorzugt von 2.5:1 bis 5.5:1. Das Querstreckverhältnis liegt allgemein im Bereich von 3.0:1 bis 5.0:1, bevorzugt von 3.5:1 bis 4.5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Für die Herstellung einer Folie mit sehr gutem Abzieh- und Delaminierungsverhalten (die Folie darf beim Abziehen nicht Delaminieren) hat es sich als günstig erwiesen, wenn die planare Orientierung der Folie $\Delta$p kleiner als 0.162 ist. In diesem Fall ist die Festigkeit der Folie in Dickenrichtung so groß, dass beim Abziehen des Deckels vom Becher die Folie definitiv nicht delaminiert, bzw. nicht einreißt oder weiterreißt.

Es hat sich herausgestellt, dass die wesentlichen Einflussgrößen auf die planare Orientierung der Folie $\Delta$p die Verfahrensparameter in der Längsstreckung und in der Querstreckung sind, sowie der SV-Wert (Standard Viskosität) des verwendeten Rohstoffes. Zu den Verfahrensparametem gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine.

Erhält man beispielsweise mit einer Folienproduktionsanlage eine planare Orientierung der Folie $\Delta$p von 0.167 mit dem Parametersatz $\lambda_{MD}$ = 4.8 und $\lambda_{TD}$ = 4.0, den Strecktemperaturen in Längs- und in Querrichtung $T_{MD}$ = 115 °C und $T_{TD}$ = 125 °C, so erhält man durch Erhöhung der Längsstrecktemperatur auf $T_{MD}$ = 125 °C oder durch Erhöhung der Querstrecktemperatur auf $T_{TD}$ = 135 °C oder durch Absenkung des Längsstreckverhältnisses auf $\lambda_{MD}$ = 4.0 oder durch Absenkung des Querstreckverhältnisses auf $\lambda_{TD}$ = 3.6 eine planare Orientierung $\Delta$p von 0.160. Die Folienbahngeschwindigkeit betrug hierbei 340 m/min und der SV-Wert des Materials etwa 730. Die angegeben Temperaturen beziehen sich bei der Längsstreckung auf die jeweiligen Walzentemperaturen und bei der Querstreckung auf die Folientemperaturen, die mittels IR (Infrarot) gemessen wurden.

Bei der nachfolgenden Thermofixierung wird die Folie etwa 0.1 bis 10 s lang bei einer Temperatur von 150 bis 250 °C gehalten. Anschließend wird die Folie in üblicher Weise aufgewickelt.

In verallgemeinerter Form kann zur Erreichung des erfindungsgemäßen $\Delta$p-Wertes zweckmäßiger Weise so verfahren werden, dass man - ausgehend von einem Parametersatz bei dem Folie mit nicht erfindungsgemäßem $\Delta$p-Wert erhalten werden - entweder:

a) die Strecktemperatur in MD-Richtung um $\Delta$T= 3 bis 15 K erhöht, bevorzugt um $\Delta$T = 5 bis 12 K erhöht und besonders bevorzugt um $\Delta$T = 7 bis 10 K erhöht oder
b) das Streckverhältnis in MD-Richtung um $\Delta\lambda$ = 0.3 bis 0.8 erniedrigt, bevorzugt um $\Delta\lambda$= 0.35 bis 0.7 erniedrigt und besonders bevorzugt um $\Delta\lambda$ = 0.4 bis 0.6 erniedrigt oder
c) die Strecktemperatur in TD-Richtung um $\Delta$T = 4 bis 15 K erhöht, bevorzugt um $\Delta$T = 5 bis 12 K erhöht und besonders bevorzugt um $\Delta$T = 6 bis 10 K erhöht oder
d) das Streckverhältnis in TD-Richtung um $\Delta\lambda$ = 0.3 bis 0.8 erniedrigt, bevorzugt um $\Delta\lambda$ = 0.35 bis 0.7 erniedrigt und besonders bevorzugt um $\Delta\lambda$ = 0.4 bis 0.6 erniedrigt.

Sofern zweckmäßig, können auch eine oder mehrere der obigen Maßnahmen a) bis d) miteinander kombiniert werden. Als besonders günstig hat es sich dabei erwiesen, die Maßnahmen a) und b) miteinander zu kombinieren.

Bevorzugt wird/werden nach der biaxialen Streckung eine oder beide Oberfläche/n der Folie nach einer der bekannten Methoden corona- oder flammbehandelt. Die Behandlungsintensität erzeugt im Allgemeinen eine Oberflächenspannung im Bereich über 45 mN/m.

Zur Einstellung weiterer gewünschter Eigenschaften kann die Folie zusätzlich beschichtet werden. Typische Beschichtungen sind haftvermittelnde, antistatisch, schlupfverbessernd oder dehäsiv wirkende Schichten. Es bietet sich an, diese zusätzliche Schichten über inline coating mittels wässriger Dispersionen vor dem Streckschritt in Querrichtung auf die Folie aufzubringen.

Bei der Metallierung der Folie besteht die Metallschicht bevorzugt aus Aluminium. Doch sind auch andere Materialien geeignet, die sich in Form einer dünnen, zusammenhängenden Schichtaufbringen lassen. Insbesondere istz.B. Silizium geeignet, welches im Vergleich zu Aluminium eine transparente Barriereschicht ergibt. Die oxydische Schicht besteht bevorzugt aus Oxyden von Elementen der II., III. oder IV. Hauptgruppe des Periodensystems, insbesondere Oxiden des Magnesiums, Aluminiums oder Siliciums.

Das Aufbringen von Metall- oder oxydischen Schichten erfolgt auf üblichen industriellen Anlagen. Metallschichten aus Aluminium werden üblicherweise durch Bedampfen in herkömmlichen Metallisierern (Schiffchenmethode) hergestellt. Bei oxydischen Schichten haben sich daneben insbesondere Elektronenstrahlverfahren oder Aufsputtern bewährt. Die Verfahrensparameter der Anlage beim Aufbringen der Metallschicht bzw. der oxydischen Schicht auf die Folien entsprechen den Standardbedingungen. Die Metallisierung der Folien wird vorzugsweise so durchgeführt, dass die optische Dichte der metallisierten Folien im üblichen Bereich von ca. 2.2 bis 2.8 liegen. Das Aufbringen der oxidischen Schicht auf die Folie wird so durchgeführt, dass die Schichtstärke der Oxidschicht vorzugsweise im Bereich von 30 bis 100 nm liegt.

Die erfindungsgemäße Folie zeichnet sich durch eine gute Verarbeitbarkeit, insbesondere aber durch ein hervorragendes Abziehverhalten vom Becher aus. Insbesondere ist bei der erfindungsgemäßen Folie die Tendenz zum Ein- und Weiterreißen und zum Delaminieren äußerst gering.

Außerdem besticht die Folie durch eine hervorragende Optik, die der Folie insbesondere nach der Metallisierung zusätzlich ein sehr attraktives, werbewirksames Aussehen verleiht.

Bei der Herstellung der Folie ist Gewähr leistet, dass das Regenerat in einer Konzentration von 20 bis 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Die nachstehende Tabelle (Tabelle 1) fasst die wichtigsten erfindungsgemäßen Folieneigenschaften noch einmal zusammen.

Tabelle 1

| | Erfindungsgemäßer Bereich | bevorzugt | besonders bevorzugt | Einheit | Messmethode |
|---|---|---|---|---|---|
| Glanz | > 170 | > 175 | > 180 | | DIN 67 530 |
| Trübung | < 2.4 | < 2.2 | < 2.0 | % | |
| Planare Orientierung Δp | < 0.162 | < 0.160 | < 0.158 | | intern |
| Rauhigkeit | 40-120 | 45-110 | 50-110 | nm | DIN 53 375 |
| Reibungskoeffizient | < 0.6 | < 0.55 | < 0.5 | | DIN 4768 |
| Dicke | 6-30 | 7-25 | 8-20 | µm | |
| Füllstoffkonzentration der Deckschichten | 0.01-0.4 | 0.02-0.35 | 0.025-0.3 | % | |
| Aschegehalt | < 0.20 | < 0.18 | < 0.16 | % | |

Zur Charakterisierung der Rohstoffe und der Folien wurden die folgenden Messmethoden benutzt:

Messmethoden

SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV \ (DCE) = 6.67 \cdot 10^{-4} \ SV \ (DCE) + 0.118$$

Oberflächenspannung

Die Oberflächenspannung wurde mittels der so genannten Tintenmethode (DIN 53 364) bestimmt.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

Reibung

Die Reibung wurde nach DIN 53 375 bestimmt. Die Gleitreibungszahl wurde 14 Tage nach der Produktion gemessen.

Trübung

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

Aschegehalt

Der Aschegehalt wird nach der internen Betriebsvorschrift Nr. 8 durchgeführt. Und erfolgt in Anlehnung an die Prüfnormen DIN 53 568 und DIN 3451. Die Vorveraschung der Proben erfolgt nicht in offener Flamme, sondern ohne Rußentwicklung in einem elektrisch beheizten Schnellverascher. Nach Veraschung wird die Probe in einem Muffelofen bei 600 ° C bis zur Gewichtskonstanz geglüht und ausgewogen.

Rauigkeit

Die Rauigkeit $R_a$ der Folie wurde nach DIN 4768 bei einem Cut-off von 0.25 mm bestimmt.

Bestimmung der planaren Orientierung $\Delta p$

Die Bestimmung der planaren Orientierung erfolgt über die Messung der Brechungsindizes mit dem Abbe-Refraktometer nach der internen Betriebsvorschrift 24.

Probenvorbereitung

| Probengröße | Probenlänge | 60 bis 100 mm |
| --- | --- | --- |
| | Probenbreite | entspricht Prismenbreite von 10 mm |

Zur Bestimmung von $n_{MD}$ und $\alpha$ (=$n_z$) muß die zu messende Probe aus der Folie ausgeschnitten werden, bei der die Laufkante der Probe exakt mit der TD-Richtung übereinstimmen muß. Zur Bestimmung von $n_{TD}$ und $n_\alpha$ ($=n_z$) muß die zu messende Probe aus der Folie ausgeschnitten werden, bei der die Laufkante der Probe exakt mit der MD-Richtung übereinstimmen muß. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (n=1.745) bzw. Dijodmethan-Bromnaphthalin-Gemisch aufgetragen. Der Brechungsindex des Gemisches muß größer als 1.685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1.62 bis 1.68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Meßskala angezeigte Wert wird abgelesen und in das Meßprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1.49 und 1.50 zu sehen ist.

Jetzt wird der Brechungsindex in $n_\alpha$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und der auf der Skala angezeigte Wert abgelesen und in die Tabelle eingetragen.

Anschließend wird die Probe gedreht und die entsprechenden Brechungsindizes $n_{MD}$ und $n_\alpha$ ($=n_z$) der anderen Oberflächenseite gemessen und in eine entsprechende Tabelle eingetragen. Nach derBestimmung derBrechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ ($= n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte $\Delta n$, $\Delta p$ und $n_{av}$ werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

Beurteilung des Abziehverhaltens der Folie vom Becher

Die Beurteilung des Abziehverhaltens der Folie vom Becher erfolgt visuell. Bei diesem Prüfverfahren wird die Folie (der Deckel) auf den Becher geklebt und nach einer Lagerzeit (Aushärtzeit) von 48 h vom Becher abgezogen. Das Abziehverhalten wird mit
++ (= gut) bewertet, wenn die Folie dabei weder einreißt noch delaminiert.
-- (= schlecht) bewertet, wenn die Folie dabei einreißt und/oder delaminiert
+- (= Zwischenwert).

Beispiel 1

Chips aus Polyethylenterephthalat (hergestellt über das Umesterungsverfahren mit Mn als Umesterungskatalysator, Mn-Konzentration: 70 ppm) wurden bei 150 °C auf eine Restfeuchte von unterhalb 100 ppm getrocknet und dem Extruder für die Basisschicht B zugeführt.

Daneben wurden Chips aus Polyethylenterephthalat (hergestellt über das Umesterungsverfahren mit Mn als Umesterungskatalysator, Mn-Konzentration: 100 ppm) und einem Füllstoff auf Basis von Siliciumdioxid bei 150 °C auf eine Restfeuchte von unterhalb 100 ppm getrocknet und ebenfalls dem Extruder für die Deckschichten A und C zugeführt.

Es wurde durch Koextrusion und anschließende stufenweise Orientierung in Längs- und in Querrichtung eine transparente, dreischichtige Folie mit symmetrischem (ABA-) Aufbau und mit einer Gesamtdicke von 12 µm hergestellt. Die Dicke der jeweiligen Deckschichten A und C betrugen jeweils 1.0 µm.

Deckschichten A, C (A = C), Mischung aus:

86.0 Gew.-%  Polyethylenterephthalat 4020 der Firma KOSA mit einem SV-Wert von 800
14.0 Gew.-%  Masterbatch aus 99.0 Gew.-% Polyethylenterephthalat (SV-Wert von 800) und 0.5 Gew.-% Sylobloc® 44 H (kolloidales $SiO_2$ der Fa. Grace) und 0.5 Gew.-% Aerosil® TT 600 (kettenartiges $SiO_2$ der Fa. Degussa)

Basisschicht B:

100.0 Gew.-%  Polyethylenterephthalat 4020 der Firma KOSA mit einem SV-Wert von 800

Die Herstellungsbedingungen in den einzelnen Verfahrensschritten waren:

| | | |
|---|---|---|
| Extrusion | Temperaturen B-Schicht | 290°C |
| | Temperatur der Abzugswalze | 30 °C |
| Längsstreckung | Temperatur | 125°C |
| | Längsstreckverhältnis | 3.3 |
| Querstreckung | Temperatur | 135°C |
| | Querstreckverhältnis | 4.0 |
| Fixierung | Temperatur | 230°C |
| | Dauer | 3 s |

Die Folie zeigte die gewünschten optischen Eigenschaften, das gewünschte Verarbeitungsverhalten und insbesondere das gewünschte Verhalten beim Abziehen der Folie vom Becher. Die Folie reißt nicht ein und zeigt keine Tendenz zum Delaminieren.

Die erzielten Folieneigenschaften derart hergestellter Folien sind in der Tabelle 2 dargestellt.

**Vergleichsbeispiel 1**

Im Vergleich zu Beispiel 1 wurde jetzt die Rohstoffzusammensetzung für die beiden Deckschichten A und C geändert.

Deckschichten A, C (A = C), Mischung aus:

55.0 Gew.-%  Polyethylenterephthalat 4020 der Firma KOSA mit einem SV-Wert von 800
45.0 Gew.-%  Masterbatch aus 99.0 Gew.-% Polyethylenterephthalat (SV-Wert von 800) und 0.5 Gew.-% Sylobloc 44 H (kolloidales $SiO_2$ der Fa. Grace) und 0.5 Gew.-% Aerosil TT 600 (kettenartiges $SiO_2$ der Fa. Degussa)

Im Vergleich zu Beispiel 1 wurden die Verfahrensbedinungen nicht geändert.

Die Folie zeigte nicht die gewünschten optischen Eigenschaften. Die Metallisierung wirkt matt, was unerwünscht ist.

**Vergleichsbeispiel 2**

Im Vergleich zu Beispiel 1 wurden jetzt die Verfahrensbedingungen geändert, die Rohstoffzusammensetzung für die Basisschicht B wurde dagegen gegenüber Beispiel 1 nicht geändert:

| | | |
|---|---|---|
| Extrusion | Temperaturen B-Schicht | 290°C |
| | Temperatur der Abzugswalze | 30 °C |
| Längsstreckung | Temperatur | 115°C |

(fortgesetzt)

| | | |
|---|---|---|
| | Längsstreckverhältnis | 4.2 |
| Querstreckung | Temperatur | 120°C |
| | Querstreckverhältnis | 4.0 |
| Fixierung | Temperatur | 230°C |
| Dauer | | 3 s |

Die Folie zeigte nicht das gewünschte Verhalten beim Abziehen der Folie vom Becher. Die Folie reißt ein und zeigt eine hohe Tendenz zum Delaminieren.

**Vergleichsbeispiel 3**

Es wurde das Beispiel 1 der EP 0 685 509 nachgearbeitet. Die Folie hatte nicht das geforderte gute Verarbeitungsverhalten. Beim Metallisieren der Folie bildeten sich Falten in der Rolle, die eine Verarbeitung zu Deckeln nicht mehr zuließ. Außerdem kam es beim Metallisieren der Folie auf Grund der geringen mechanischen Eigenschaften zu Verdehnungen der Folienbahn, wodurch die Rollenaufmachung weiter verschlechterte. Die Folie konnte nicht mit dem Papier kaschiert werden.

**Vergleichsbeispiel 4**

Es wurde das Beispiel 1 der EP 0 707 979 nachgearbeitet. Die Folie war in den Herstellungskosten wegen der verwendeten Beschichtung viel zu hoch. Außerdem zeigte die Folie nicht die gewünschten optischen Eigenschaften. Die Metallisierung wirkt matt, was unerwünscht ist.

**Vergleichsbeispiel 5**

Es wurde das Beispiel 1 der EP 0 612 790 nachgearbeitet. Die Folie zeigte nicht das gewünschte Verhalten beim Abziehen der Folie vom Becher. Die Folie reißt ein und zeigte eine hohe Tendenz zum Delaminieren. Außerdem zeigte die Folie nicht die gewünschten optischen Eigenschaften. Die Trübung der Folie ist zu hoch und der Glanz zu niedrig. Die Metallisierung wirkt matt, was unerwünscht ist.

## Tabelle 2

| Beispiel | Dicke der Folie µm | Glanz | Trübung % | Planare Orientierung Δp | Rauhigkeit nm | Reibung | Verarbeitungs-verhalten)* | Abziehverhalten des Deckels |
|---|---|---|---|---|---|---|---|---|
| Beispiel 1 | 12 | 190 | 1.8 | 0.157 | 50 | 0.42 | ++ | ++ |
| Vergleichs-beispiel 1 | 12 | 140 | 3.9 | 0.157 | 70 | 0.38 | ++ | ++ |
| Vergleichs-beispiel 2 | 12 | 190 | 1.8 | 0.168 | 50 | 0.41 | ++ | -- |
| Vergleichs-beispiel 3 = EP 0 685 509 | 12 | 150 | 3.3 | 0.156 | 50 | 0.54 | -- | +- |
| Vergleichs-beispiel 4 = EP 0 707 979 | 5 | 145 | 3.8 | 0.165 | 60 | 0.45 | -- i) | -- |
| Vergleichs-beispiel 5 = EP 0 612 790 | 15 | 140 | 4.8 | 0.170 | 20 | 0.42 | + | -- |

i) wegen zu geringer Foliendicke

*) wird bestimmt insbesondere durch Reibungskoeffizient (COF), Tendenz zum Blocken und Aufwickelbarkeit

++ = geringer COF, geringe Tendenz zum Blocken und gute Aufwickelbarkeit

+ = geringer COF, Tendenz zum Blocken und gute Aufwickelbarkeit

-- = erhöhter COF, Tendenz zum Blocken und verschlechterte Aufwickelbarkeit

**Patentansprüche**

1.  Koextrudierte, zumindest dreischichtige transparente, biaxial orientierte Polyesterfolie mit mindestens einer Basisschicht B, die zu mindestens 80 Gew.-% aus einem thermoplastischem Polyester besteht und wobei auf jede Oberfläche dieser Basisschicht eine Deckschicht aufgebracht ist, wobei mindestens eine Deckschicht Partikel enthält, **dadurch gekennzeichnet, dass**

    - der Glanz beider Folienoberflächen größer als 170 ist
    - die Trübung der Folie kleiner als 2.4 % ist und
    - die planare Orientierung $\Delta$p der Folie kleiner als 0.162
    - die Reibung (COF) der Folienoberfläche kleiner als 0.6

    ist.

2.  Transparente, biaxial orientierte Polyesterfolie nach Anspruch 1, **dadurch gekennzeichnet, dass** die planare Orientierung $\Delta$p kleiner als 0.160 ist.

3.  Transparente, biaxial orientierte Polyesterfolie nach Anspruch 1 oder 2, **dadurch gekennzeichnet, dass** der Glanz größer als 175 ist.

4.  Transparente, biaxial orientierte Polyesterfolie nach Anspruch 1, 2 oder 3, **dadurch gekennzeichnet, dass** die Trübung kleiner als 2.0 ist.

5.  Transparente, biaxial orientierte Polyesterfolie nach einem oder mehreren der Ansprüche 1 bis 4, **dadurch gekennzeichnet, dass** es sich um eine dreischichtige Folie handelt.

6.  Transparente, biaxial orientierte Polyesterfolie nach einem oder mehreren der Ansprüche 1 bis 5, **dadurch gekennzeichnet, dass** es sich um eine mehrschichtige Folie vom Aufbau ABA oder ACBCA handelt.

7.  Transparente, biaxial orientierte Polyesterfolie nach einem oder mehreren der Ansprüche 1 bis 6, **dadurch gekennzeichnet, dass** die Gesamtdicke der Polyesterfolie 4 bis 50 $\mu$m beträgt.

8.  Transparente, biaxial orientierte Polyesterfolie nach einem oder mehreren der Ansprüche 1 bis 7, **dadurch gekennzeichnet, dass** die Polyesterfolie in mindestens einer Deckschicht Partikel in einer Konzentration von 0.01 bis 0.4 Gew.-%, bezogen auf die Masse der Deckschicht, enthält.

9.  Transparente, biaxial orientierte Polyesterfolie nach einer der Ansprüchen 1 bis 8, **dadurch gekennzeichnet, dass** die Partikel aus den folgenden Materialien ausgewählt sind: Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der bei der Polyesterherstellung eingesetzten Dicarbonsäuren, Ruß, Titandioxid, Kaolin und Polymerpartikel.

10. Verfahren zur Herstellung einer Folie nach Anspruch 1, wobei man die den einzelnen Schichten der Folie entsprechenden Schmelzen durch eine Flachdüse koextrudiert, die so erhaltene Folie zur Verfestigung auf mindestens einer Walze abgezogen wird, die Folie anschließend biaxial gestreckt, die biaxial gestreckte Folie thermofixiert und gegebenenfalls an der zur Behandlung vorgesehenen Oberflächenschichtcorona-oderflammbehandelt wird, **dadurch gekennzeichnet, dass** die biaxiale Streckung mindestens eine Streckung in Längsrichtung der Folie (in Maschinenrichtung = MD-Richtung) und mindestens eine Querstreckung der Folie (senkrecht zur Maschinenrichtung = TD-Richtung) umfaßt und wobei im Vergleich zu einer Folie, deren $\Delta$p-Wert < 0.162 ist, entweder:

    a) die Strecktemperatur in MD-Richtung $\Delta$T= 3 bis 15 K erhöht ist oder
    b) das Streckverhältnis in MD-Richtung um $\Delta\lambda$ = 0.3 bis 0.8 erniedrigt ist oder
    c) die Strecktemperatur in TD-Richtung um $\Delta$T = 4 bis 15 K erhöht ist oder
    d) das Streckverhältnis in TD-Richtung um $\Delta\lambda$ = 0.3 bis 0.8 erniedrigt ist oder

    eine oder mehrere der obigen Maßnahmen a) bis d) miteinander kombiniert sind.

11. Verwendung einer transparenten, biaxial orientierten Polyesterfolie nach einem oder mehreren der Ansprüche 1 bis 9 als Deckelfolie.

**Claims**

1. A coextruded, transparent, biaxially oriented polyester film having at least three layers, with at least one base layer B, at least 80% by weight of which is composed of a thermoplastic polyester, where an outer layer has been applied to each surface of this base layer, and where at least one outer layer comprises particles, wherein

   - the gloss of both surfaces of the film is above 170
   - the haze of the film is below 2.4%
   - the planar orientation $\Delta p$ of the film is below 0.162, and
   - the coefficient of friction (COF) of the surface of the film is below 0.6.

2. The transparent, biaxially oriented polyester film as claimed in claim 1, wherein the planar orientation $\Delta p$ is below 0.160.

3. The transparent, biaxially oriented polyester film as claimed in claim 1 or 2, wherein the gloss is above 175.

4. The transparent, biaxially oriented polyester film as claimed in claim 1, 2 or 3, wherein the haze is below 2.0%.

5. The transparent, biaxially oriented polyester film as claimed in one or more of claims 1 to 4, wherein the film has three layers.

6. The transparent, biaxially oriented polyester film as claimed in one or more of claims 1 to 5, wherein the film has more than one layer and has ABA or ACBCA structure.

7. The transparent, biaxially oriented polyester film as claimed in one or more of claims 1 to 6, wherein the total thickness of the polyester film is from 4 to 50 $\mu$m.

8. The transparent, biaxially oriented polyester film as claimed in one or more of claims 1 to 7, wherein at least one outer layer of the polyester film has a concentration, based on the weight of the outer layer, of from 0.01 to 0.4% by weight of particles.

9. The transparent, biaxially oriented polyester film as claimed in any of claims 1 to 8, wherein the particles have been selected from the following materials: calcium carbonate, amorphous silica, talc, magnesium carbonate, barium carbonate, calcium sulfate, barium sulfate, lithium phosphate, calcium phosphate, magnesium phosphate, aluminum oxide, lithium fluoride, the calcium, barium, zinc, or manganese salts of the dicarboxylic acids used in polyester preparation, carbon black, titanium dioxide, kaolin, and polymer particles.

10. A process for producing a film as claimed in claim 1, where the melts corresponding to the individual layers of the film are coextruded through a flat-film die, the resultant film is drawn off on at least one roller for solidification, the film is then biaxially stretched, and the biaxially stretched film is heat-set and, where appropriate, corona- or flame-treated on the surface layer intended for treatment, which comprises using a biaxially stretching method which encompasses at least one longitudinal stretching of the film (in MD = machine direction) and at least one transverse stretching of the film (in TD = perpendicular to the machine direction), and where, compared with a film whose $\Delta p$ value is < 0.162, either:

    a) the stretching temperature in the MD has been increased by $\Delta T$ = from 3 to 15 K, or
    b) the stretching ratio in the MD has been lowered by $\Delta \lambda$ = from 0.3 to 0.8, or
    c) the stretching temperature in the TD has been increased by $\Delta T$ = from 4 to 15 K, or
    d) the stretching ratio in the TD has been lowered by $\Delta \lambda$ = from 0.3 to 0.8, or

    two or more of the above measures a) to d) have been combined with one another.

11. The use of a transparent, biaxially oriented polyester film as claimed in one or more of claims 1 to 9 as a lid film.

**Revendications**

1.  Film polyester transparent, orienté biaxialement, au moins tricouche, coextrudé, comportant au moins une couche de base B composée à au moins 80 % en poids d'un polyester thermoplastique, chaque face de cette couche de base portant une couche de recouvrement, au moins une couche de recouvrement contenant des particules, **caractérisé en ce que** :

    -   la brillance des deux surfaces du film est supérieure à 170 ;
    -   la turbidité du film est inférieure à 2,4 % ; et
    -   l'orientation planaire $\Delta p$ du film est inférieure à 0,162 ;
    -   le frottement (COF) de la surface du film est inférieur à 0,6.

2.  Film polyester transparent, orienté biaxialement, selon la revendication 1, **caractérisé en ce que** l'orientation planaire $\Delta p$ est inférieure à 0,160.

3.  Film polyester transparent, orienté biaxialement, selon la revendication 1 ou 2, **caractérisé en ce que** la brillance est supérieure à 175.

4.  Film polyester transparent, orienté biaxialement, selon l'une des revendications 1 à 3, **caractérisé en ce que** la turbidité est inférieure à 2,0.

5.  Film polyester transparent, orienté biaxialement, selon l'une quelconque des revendications 1 à 4, **caractérisé en ce qu'**il s'agit d'un film tricouche.

6.  Film polyester transparent, orienté biaxialement, selon l'une quelconque des revendications 1 à 5, **caractérisé en ce qu'**il s'agit d'une multicouche de structure ABA ou ACBCA.

7.  Film polyester transparent, orienté biaxialement, selon l'une quelconque des revendications 1 à 6, **caractérisé en ce que** l'épaisseur totale du film polyester est de 4 à 50 µm.

8.  Film polyester transparent, orienté biaxialement, selon l'une quelconque des revendications 1 à 7, **caractérisé en ce que** le film polyester contient, dans au moins une couche de recouvrement des particules en une concentration de 0,01 à 0,4 % en poids par rapport à la masse de couche de recouvrement.

9.  Film polyester transparent, orienté biaxialement, selon l'une quelconque des revendications 1 à 8, **caractérisé en ce que** les particules sont choisies parmi les matériaux suivants : carbonate de calcium, acide silicique amorphe, talc, carbonate de magnésium, carbonate de baryum, sulfate de calcium, sulfate de baryum, phosphate de lithium, phosphate de calcium, phosphate de magnésium, oxyde d'aluminium, fluorure de lithium, sels du calcium, du baryum, du zinc ou du manganèse des acides dicarboxyliques mis en oeuvre lors de la fabrication du polyester, noir de carbone, dioxyde de titane, kaolin et particules de polymères.

10. Procédé de préparation d'un film selon la revendication 1, dans lequel les matières en fusion correspondant aux couches respectives du film sont coextrudées à travers une buse plate, le film ainsi obtenu est embobiné sur au moins un rouleau, le film est ensuite étiré biaxialement, ce film étiré biaxialement est thermofixé et le cas échéant soumis à un traitement corona ou à la flamme sur la couche de surface prévue pour ce traitement, **caractérisé en ce que** ce étirement biaxial comporte au moins un étirement en direction longitudinale du film (en direction machine = direction MD) et au moins un étirement transversal du film (perpendiculaire à la direction de machine = direction TD), et **en ce que**, comparé à un film dont la valeur $\Delta p$ est inférieure à 0,162, soit :

    a) la température d'étirement en direction MD est augmentée de $\Delta T$ = 3 à 15 K, ou
    b) le ratio d'étirement en direction MD est diminué de $\Delta \lambda$ = 0,3 à 0,8, ou
    c) la température d'étirement en direction TD est augmentée de $\Delta T$ = 4 à 15 K, ou
    d) le ratio d'étirement en direction TD est diminué de $\Delta \lambda$ = 0,3 à 0,8, ou une ou plusieurs des mesures ci-dessus sont combinées entre elles.

11. Utilisation d'un film polyester orienté biaxialement, transparent, selon l'une quelconque des revendications 1 à 9, à titre de film de fermeture.